# EUROPEAN PATENT APPLICATION

(11) **EP 1 156 361 A1**
(43) Date of publication of application: **21.11.2001**
(21) Application number: 00201727.5
(22) Date of filing: 16.05.2000
(51) Int. Cl.: G02F 1/13363, G02F 1/139

(54) **Reflective STN liquid crystal display**

(71) Applicant: Dejima Tech B.V., 6827 AV Arnhem (NL)
(72) Inventor: Bosma, Martin, 6816 TG Arnhem (NL)
(74) Representative: Schalkwijk, Pieter Cornelis, c.s.

(57) **Abstract**

The invention pertains to a single-polarizer, normally black reflective display comprising an STN-LCD cell, a reflector, one polarizer, and a twisted retardation layer, characterized in that the sign of the twist angle of the STN-LCD cell (T_{STN}) is opposite to the twist angle of the twisted retardation layer (T_{RL}) and that |T_{STN} - T_{RL}| is 30° to 90°, and |R_{STN} - R_{RL}| is 10 - 700 nm, wherein R_{STN} and R_{RL} stand for the retardation values of the STN-LCD cell and the retardation layer, respectively, and that the difference between the dispersion of the retardation layer and the STN-LCD cell is more than 5%, wherein the dispersion is defined as the ratio of the retardation value at λ=436 nm to the retardation value at λ=668 nm.

## Description

The present invention pertains to reflective, normally black super twisted nematic (NB-STN) displays with a single polarizer and a twisted retardation layer.

Compared to backlit displays, reflective liquid crystalline displays (LCDs) are much better suited for use as displays for mobile applications, as they have the advantage of extremely low power consumption, low thickness, light weight, and outdoor legibility. Conventional reflective liquid-crystalline displays, using a (super) twisted nematic display cell with two polarizers and a reflection layer, however, suffer from their limited brightness and parallax.

One way of increasing the brightness of reflective displays and reducing the parallax is by the use of a single polarizer and an internal reflector inside the display cell. These single-polarizer reflective displays are known in the art. The state of the art is reflected in a review article by Wu et al., Journal of the SID, 7/2, 119-126 (1999), and in an article by Tillin et al., SID 98 Digest, 311-314 (1998). Single-polarizer, reflective displays offer a potential to achieve a high-brightness, high-contrast, reflective display with low power consumption.

Twisted nematic (TN) and super twisted nematic (STN) single-polarizer, reflective LCDs have the benefit of potentially high brightness, color capability, and a technology that is largely the same as the one used in transmissive (S)TN displays. Super twisted nematic displays have large twisting angles (typically about 180° - 260°) as compared to conventional twisted nematic (TN) liquid crystalline displays (LCDs). The STN structure results in very steep electro-optical response characteristics, which is required for high multiplex driving. For this reason STN-LCDs have a superior image quality as compared to conventional TN-LCDs when used for large displays with a high level of passive multiplexing. Compared to active-matrix driven (AM) single-polarizer reflective TN displays, the passive-matrix driven, single-polarizer reflective STN displays have the additional advantages of simple display structure and simple fabrication process, low costs, and low operating voltage and power consumption. However, uncompensated STN displays generally show a poor contrast and are not achromatic, which limits their use in black-white (BW) and color displays. Use of retardation layers can improve the optical performance of STN layers, but if untwisted retarders are used, multiple layers are often required to bring the optical performance to an acceptable level. Tillin reported that for single-polarizer, reflective STN displays it is also necessary to use multiple retardation layers to obtain a perfect dark state. The use of multiple retarders is unwanted both from a designer point-of-view and from a manufacturing point-of-view.

It is an object of the present invention to obtain a normally black, single-polarizer reflective STN display with a high brightness and high contrast ratio without using a multitude of retarders. It was found that such normally black, single-polarizer reflective displays comprising an STN-LCD cell, a reflector, one polarizer, and a twisted retardation layer can be obtained when the sign of the twist angle of the STN-LCD cell (T_{STN}) is opposite to the sign of the twist angle of the twisted retardation layer (T_{RL}) and that |T_{STN} - T_{RL}| is 30° to 90°, and |R_{STN} - R_{RL}| is 10 - 700 nm, wherein R_{STN} and R_{RL} stand for the retardation values of the STN-LCD cell and the retardation layer, respectively, and that the difference between the dispersion of the retardation layer and the STN-LCD cell is more than 5%, wherein the dispersion is defined as the ratio of the retardation value at λ=436 nm to the retardation value at λ=668 nm.

Preferably, the single-polarizer reflective STN display comprises a reflective layer, which is superposed by the addressable STN-layer, which is superposed by a twisted retardation layer, which is superposed by a polarizer. Additional layers such as diffusing or scattering films and color filters may also be present. The polarizer, the twisted retardation layer, and the STN-LCD cell as such are common components of displays. The reflector may be any suitable, non-depolarizing reflector. The reflector can be placed inside the display cell to reduce parallax. The functions of internal reflector and back-electrode may be combined. As internal reflective electrodes, layers of e.g. silver (Ag) or aluminum (Al) can be used.
For the single-polarizer, reflective STN display of the present invention the |T_{STN} - T_{RL}| is 30° to 90°, which means that ignoring the sign of the twisting angle, the difference between the twist angle of the STN-LCD cell (T_{STN}) and the twist angle of the retardation layer (T_{RL}) has a value between 30° and 90°. Preferably, |T_{STN} -T_{RL}| is 40° to 70°.
Furthermore, the |R_{STN} - R_{RL}| is 10 - 700 nm, which means that the difference between the retardation value of the STN-LCD cell and the retardation value of the retardation layer is between 10 nm and 700 nm. Preferably, |R_{STN} - R_{RL}| is 50 nm - 400 nm. The retardation at a certain wavelength λ is defined as d·Δn(λ), wherein d is the thickness of the layer (film) and Δn(λ) is the birefringence of the layer at the wavelength λ.
The dispersion of the birefringence is the wavelength-dependence of the birefringence. As the retardation value of a layer is equal to d·△n(λ), for any birefringent layer the wavelength-dependence (dispersion) of the retardation is equal to the dispersion of the birefringence. The dispersion is defined here as the ratio of the retardation value at λ=436 nm to the retardation value at λ=668 nm (R₄₃₆/R₆₆₈), which can be determined for both the STN-LCD cell (R_{436STN}/R_{668STN}) and the retardation layer (R_{436RL}/R_{668RL}).

The retardation layer may be any suitable twisted retardation layer. For displays that are used under considerable change of ambient temperature, particularly useful twisted retardation layers may be retardation layers such as Twistar™ (ex Dejima) together with an LCD cell, where the difference between the Tc value of the twisted retardation layer and the Tc value of the STN-LCD cell is less than 20°C, preferably less than 10°C. Preferably, the difference between the Tc value of the twisted retardation layer and the Tc value of the STN-LCD cell is not 0.

The invention is further illustrated by the following examples, the results of which were obtained from computer simulations assuming achromatic polarizers and ideal mirror reflectors.

### Comparison example 1

A typical two-polarizer, reflective normally white (NW) display comprising a mirror reflector, an STN display cell (R₅₅₀ₙₘ = 788 nm, φ = +240°) compensated with a polycarbonate compensation layer (untwisted, R₅₅₀ₙₘ = 566 nm, laminated on top of the STN-layer with its slow axis at -75° relative to the output-director of the display cell) and placed between two polarizers laminated with their respective absorption axis at -40° and +75° relative to the output-director of the display cell at the front and the back of display, respectively, has a luminance of 38% in the bright state (chromaticity: X=0.312, Y=0.328) and a contrast ratio of 157:1 (perpendicular incident, white light). The luminance of an achromatic polarizer directly laminated onto this mirror reflector is 46%.

### Comparison example 2

A single-polarizer, reflective normally black (NB) active-matrix driven display comprising a mirror reflector, an AM-TN display cell (φ = +63°, R₅₅₀ₙₘ = 187 nm, R_{436TN}/R_{668TN} = 1.151, laminated on top of the reflector), and a single polarizer laminated with its absorption axis parallel to the output-director of the display cell, has a luminance of 37% in the bright state (chromaticity: X=0.351, Y=0.351) and a contrast ratio of 25:1 (perpendicular incident, white light).

### Example 1

A single-polarizer, reflective NB display according to the present invention comprising a mirror reflector, an STN display cell (φ = +240°, R₅₅₀ₙₘ = 757 nm, R_{436STN}/R_{668STN} = 1.104, laminated on top of the reflector), a twisted retardation layer (Twistar™, φ = -177°, R₅₅₀ₙₘ = 660 nm, R_{436RL}/R_{668RL} = 1.191, laminated on top of the STN-layer with its input-director at an angle of +85° relative to the output-director of the display cell), and a single polarizer laminated with its absorption axis at an angle of +20° relative to the output-director of the display cell, has a luminance of 44.5% in the bright state (chromaticity: X=0.337, Y=0.336) and a contrast ratio of 185:1 (perpendicular incident, white light).

### Example 2

A single-polarizer, reflective NB display according to the present invention comprising a mirror reflector, an STN display cell (φ = +260°, R₅₅₀ₙₘ = 821 nm, R_{436STN}/R_{668STN} = 1.104, laminated on top of the reflector), a twisted retardation layer (Twistar™, φ = -197°, R₅₅₀ₙₘ = 680 nm, R_{436RL}/R_{668RL} = 1.191, laminated on top of the STN-layer with its input-director at an angle of +85° relative to the output-director of the display cell), and a single polarizer laminated on top of the twisted retarder with its absorption axis parallel to the output-director of the display cell, has a luminance of 44.5% in the bright state (chromaticity: X=0.337, Y=0.336) and a contrast ratio of 285:1 (perpendicular incident, white light).

## Claims

1. A single-polarizer, normally black reflective display comprising an STN-LCD cell, a reflector, one polarizer, and a twisted retardation layer, **characterized in that** the sign of the twist angle of the STN-LCD cell (T_{STN}) is opposite to the twist angle of the twisted retardation layer (T_{RL}) and that |T_{STN} - T_{RL}| is 30° to 90°, and |R_{STN} - R_{RL}| is 10 - 700 nm, wherein R_{STN} and R_{RL} stand for the retardation values of the STN-LCD cell and the retardation layer, respectively, and that the difference between the dispersion of the retardation layer and the STN-LCD cell is more than 5%, wherein the dispersion is defined as the ratio of the retardation value at λ=436 nm to the retardation value at λ=668 nm.

2. The display of claim 1 comprising a reflective layer, which is superposed by an STN-LCD cell, which is superposed by a twisted retardation layer, which is superposed by a polarizer, **characterized in that** the sign of the twist angle of the STN-LCD cell (T_{STN}) is opposite to the twist angle of the twisted retardation layer (T_{RL}) and that |T_{STN} - T_{RL}| is 30° to 90°, and |R_{STN} - R_{RL}| is 10 - 700 nm.

3. The display of claim 1 or 2 wherein |T_{STN} - T_{RL}| is 40° to 70°.

4. The display of any one of claims 1-3 wherein |R_{STN} - R_{RL}| is 50 - 400 nm.

5. The display of any one of claims 1-4 wherein the difference between the Tc value of the twisted retardation layer and the Tc value of the STN-LCD cell is less than 20°C, preferably less than 10°C.
